Europäisches Patentamt

European Patent Office

Office européen des brevets

(19)

(11) Numéro de publication : **0 126 661**

**B1**

(12)

# FASCICULE DE BREVET EUROPÉEN

(45) Date de publication du fascicule du brevet :
16.06.87

(51) Int. Cl.⁴ : **F 16 F 15/26**

(21) Numéro de dépôt : **84400756.7**

(22) Date de dépôt : **17.04.84**

(54) Procédé et dispositif d'équilibrage pour une machine rotative à piston.

(30) Priorité : **21.04.83 FR 8306611**

(43) Date de publication de la demande :
**28.11.84 Bulletin 84/48**

(45) Mention de la délivrance du brevet :
**16.06.87 Bulletin 87/25**

(84) Etats contractants désignés :
**AT DE GB NL SE**

(56) Documents cités :
**DE-A- 1 935 121**
**FR-A- 2 328 842**
**FR-A- 2 378 179**

(73) Titulaire : **Negre, Guy**
**Les Adrechs**
**F-83560 Vinon/Verdon (FR)**

**ELF FRANCE, Société Anonyme dite:**
**Tour ELF 2 place de la Coupole La Défense 6**
**F-92400 Courbevoie (FR)**

(72) Inventeur : **Negre, Guy**
**Les Adrechs**
**F-83569 Vinon/Verdon (FR)**

(74) Mandataire : **Hirsch, Marc-Roger**
**Cabinet Hirsch 34 rue de Bassano**
**F-75008 Paris (FR)**

## Description

La présente invention s'applique à un procédé et à un dispositif d'équilibrage des forces d'inertie dans une machine rotative comportant au moins un piston mobile axialement dans un cylindre, telle qu'un moteur thermique, et équipée par cylindre d'au moins un distributeur tournant d'admission et/ou un distributeur tournant d'échappement.

Dans les machines à pistons alternatifs telles que les moteurs à combustion interne ou les compresseurs, les forces dues à la pression des gaz de la chambre de combustion ainsi que les forces d'inertie correspondant au mouvement des organes mobiles tels que pistons, bielles, manivelles, vilebrequins, sont continuellement variables au cours du cycle de rotation. Si les forces de compression sont équilibrées dans le bâti du moteur, par contre les forces d'inertie ne le sont pas et se transmettent au bâti du moteur et doivent être, sinon supprimées, du moins réduites de façon significative pour assurer une rotation du moteur qui ne trouble pas trop son environnement en transmettant les vibrations causées par sa rotation et qui ne risque pas de détruire prématurément le moteur et ses fixations à un organe support tel qu'un véhicule.

Pour limiter les vibrations des machines à piston causées par leur rotation propre, on sait compenser la répartition irrégulière des masses autour de l'axe de rotation par des contrepoids prévus principalement sur le vilebrequin du moteur, en opposition, par rapport à l'axe de rotation de vilebrequin, à la manivelle du piston et à la bielle et au piston qui lui sont articulés. Un tel équilibrage est toujours difficile car la taille et la position des contrepoids ne peuvent souvent être déterminées exactement que par expérimentations successives et, de plus, les contrepoids ne peuvent pas toujours être aisément logés dans le carter de la machine.

Une telle situation se rencontre en particulier dans les moteurs ou les compresseurs monocylindriques où la manivelle reliant la bielle au vilebrequin doit présenter une rigidité maximale avec des paliers très encombrants tels que des paliers à rouleaux qui interdisent pratiquement de disposer dans le carter des contrepoids d'un volume suffisant pour équilibrer le balourd équivalent au coude du vilebrequin et à la bielle qu'il supporte.

On connaît déjà un dispositif d'équilibrage (voir la publication FR-A-2 328 842) dans lequel le volume du contrepoids monté sur le vilebrequin d'un moteur à combustion interne ou engin analogue est sensiblement réduit, étant donné que ce contrepoids est allégé, cet allégement étant compensé par au moins un contrepoids complémentaire disposé à l'extérieur du carter de vilebrequin et dimensionné de façon telle que la somme de sa masse efficace et de celle du contrepoids du vilebrequin soit équivalente au poids efficace d'un contrepoids unique classique monté sur le vilebrequin. Cet agencement permet donc de réduire le volume du carter de vilebrequin, tout en produisant l'effet d'équilibrage désiré. Toutefois, le contrepoids complémentaire du dispositif connu est disposé sur un élément rotatif spécialement prévu à cette fin (et entraîné par le vilebrequin par l'intermédiaire d'une courroie crantée ou analogue qui assure l'entraînement de l'arbre à cames du moteur) ; cet élément rotatif avec son contrepoids et l'arbre sur lequel il est monté entraînent une plus grande complexité de la structure du moteur, une augmentation de la main-d'oeuvre et des matières requises pour sa fabrication, ainsi qu'un accroissement de l'encombrement global du moteur.

La présente invention a notamment pour but de pallier ces inconvénients du dispositif connu en créant un procédé et un dispositif d'équilibrage simples et efficaces qui, tout en permettant de réduire l'encombrement du contrepoids monté sur le vilebrequin, et par conséquent l'encombrement du carter de vilebrequin, n'entraînent pas d'augmentation notable de l'encombrement global du moteur, ni aucun accroissement de la complexité de celui-ci.

A cet effet, dans le procédé d'équilibrage des forces d'inertie dans une machine rotative comportant au moins un piston mobile axialement dans un cylindre, telle qu'un moteur thermique et équipée par cylindre d'au moins un distributeur tournant d'admission et/ou un distributeur tournant d'échappement, et d'une masse principale d'équilibrage partiel fixée sur le vilebrequin à l'opposé du maneton de la bielle du piston, selon l'invention, l'on reporte sous forme d'un balourd sur ce distributeur au moins une masse d'équilibrage secondaire qui se conjugue avec la masse d'équilibrage principale pour équilibrer les forces d'inertie primaire de l'ensemble moteur bielle-manivelle, et l'on entraîne ce distributeur en rotation en sens inverse du sens de rotation du vilebrequin de la machine et en synchronisme angulaire avec ce vilebrequin, de manière à compenser les forces d'inertie tournantes et les forces d'inertie axiales de l'ensemble de la machine.

Pour diminuer ou supprimer les couples d'inertie sur les distributeurs, on fait passer la ligne joignant l'axe du distributeur tournant d'admission et l'axe du distributeur tournant d'échappement sensiblement par l'axe de rotation du vilebrequin et l'on dispose le balourd sur le distributeur de telle façon qu'il soit en position basse lorsque le piston est au point mort haut (volume minimum dans la chambre de cylindre) et en position haute lorsque le piston est au point mort bas et respectivement à droite lorsque la masse d'équilibrage principale est à gauche et vice versa.

Selon un autre mode de réalisation de l'invention, lorsque le distributeur tournant d'admission et/ou le distributeur d'échappement comporte un passage transversal, l'on incline celui-ci par rapport à l'axe du cylindre afin de permettre au passage de ne s'ouvrir complètement qu'une fois par tour de vilebrequin en dépit de la vitesse de rotation du distributeur égale à celle du vilebrequin et du sens de rotation inverse de celui du vilebrequin.

Pour réaliser un équilibrage plus complet des forces d'inertie, dans le procédé d'équilibrage dans lequel une liaison cinématique avec le vilebrequin de la machine tournante telle que la chaîne ou la courroie crantée, entraîne également une masse rotative telle qu'au moins une poulie ou un pignon tendeur, l'on reporte sous forme d'un balourd sur cette masse rotative au moins une partie des masses d'équilibrage des forces d'inertie secondaires (forces en 2 ωt) de l'ensemble piston-bielle-manivelle et l'on entraîne cette masse rotative à une vitesse de rotation double de celle du vilebrequin de la machine tournante. ·

Afin d'améliorer encore l'équilibrage, on peut remplacer la masse rotative unique par deux masses contrarotatives dotées chacune d'un balourd et sensiblement identiques pour annuler les couples de basculement des balourds. On dispose alors, de préférence, les masses contrarotatives dans des positions diamétralement opposées et alternativement en position haute et basse lorsque la (ou les) masse(s) d'équilibrage secondaire est (sont) en position haute et en position basse.

Le dispositif pour la mise en œuvre du procédé selon l'invention, dans une machine rotative comportant au moins un piston mobile axialement dans un cylindre, telle qu'un moteur thermique et équipée, par cylindre, d'au moins un distributeur tournant d'admission et/ou un distributeur tournant d'échappement et d'une masse principale d'équilibrage partiel fixée sur le vilebrequin à l'opposé du maneton de la bielle du piston, est tel que le distributeur, d'une part, est entraîné en rotation et à la même vitesse angulaire que le vilebrequin de la machine et en sens inverse du sens de rotation de ce vilebrequin par une liaison cinématique avec ce vilebrequin telle qu'une chaîne ou une courroie crantée à double crantage, et, d'autre part, comporte un balourd d'équilibrage d'au moins une partie des forces d'inertie primaires de l'ensemble piston-bielle-manivelle correspondant au cylindre.

Comme on l'a déjà mentionné pour le procédé selon l'invention, l'axe du distributeur tournant d'admission et l'axe du distributeur tournant d'échappement passe sensiblement par l'axe de rotation du vilebrequin et le balourd est disposé sur le distributeur de telle façon qu'il soit en position basse lorsque le piston est au point mort haut (volume minimum dans la chambre du cylindre) et en position haute lorsque le piston est au point mort bas et respectivement à droite lorsque la masse d'équilibrage principale est à gauche et vice versa.

Lorsque le distributeur tournant d'admission et/ou le distributeur d'échappement comporte un passage transversal, celui-ci est incliné par rapport à l'axe du cylindre afin de permettre au passage de ne s'ouvrir complètement qu'une fois par tour de vilebrequin en dépit de la vitesse de rotation du distributeur égale à celle du vilebrequin et de son sens de rotation inverse de celui du vilebrequin.

Selon un autre mode de réalisation du dispositif selon l'invention, dans lequel une liaison cinématique avec le vilebrequin de la machine tournante telle qu'une chaîne ou une courroie crantée, entraîne également une masse rotative telle qu'au moins une poulie ou un pignon tendeur, la masse rotative, d'une part, est entraînée en rotation à une vitesse angulaire double de celle du vilebrequin de la machine rotative et, d'autre part, comporte un balourd d'équilibrage d'au moins une partie des forces d'inertie secondaires (en 2 ωt) de l'ensemble piston-bielle-manivelle correspondant au cylindre. Dans ce dernier mode de réalisation, la machine tournante comporte, de préférence, à la place d'une masse rotative unique tournant à une vitesse angulaire double de celle du vilebrequin, deux masses contrarotatives dotées chacune d'un balourd d'équilibrage et sensiblement identiques pour annuler les couples de basculement des balourds et les masses contrarotatives sont disposées dans des positions diamétralement opposées et alternativement en position haute et basse lorsque la ou les masse(s) d'équilibrage est (sont) en position haute et en position basse.

D'autres buts, avantages et caractéristiques apparaîtront à la lecture de la description d'un mode de réalisation de l'invention, faite à titre non limitatif et en regard du dessin annexé où :

la figure 1 représente en coupe selon l'axe du vilebrequin, un moteur à allumage commandé doté d'un balourd d'équilibrage sur ses distributeurs tournants ;

la figure 2 est une vue en coupe schématique avec arrachement selon la ligne II-II, du moteur de la figure 1 avec les liaisons cinématiques représentées à plus grande échelle que sur la figure 1 et en traits alternés ;

les figures 3a à 3c sont des représentations schématiques des différentes positions des balourds d'équilibrage du moteur des figures 1 et 2 par rapport aux diverses positions du piston et du vilebrequin.

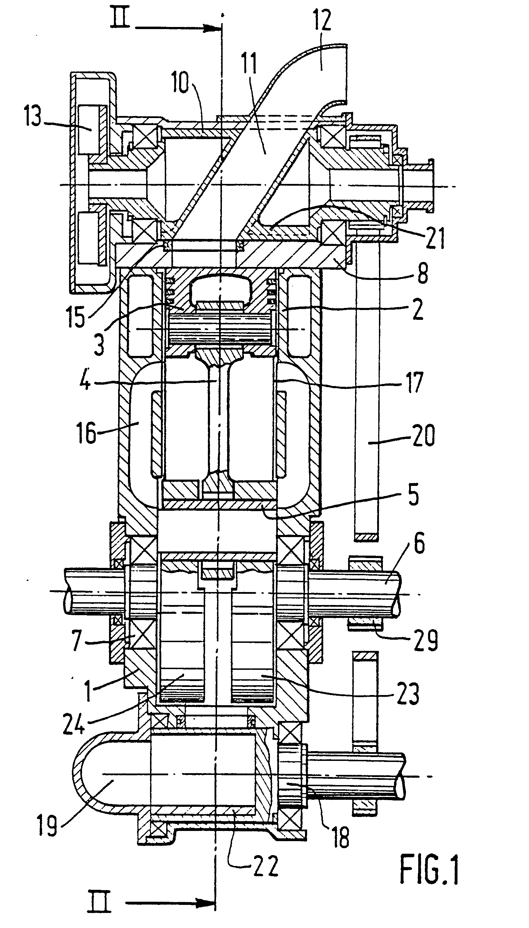

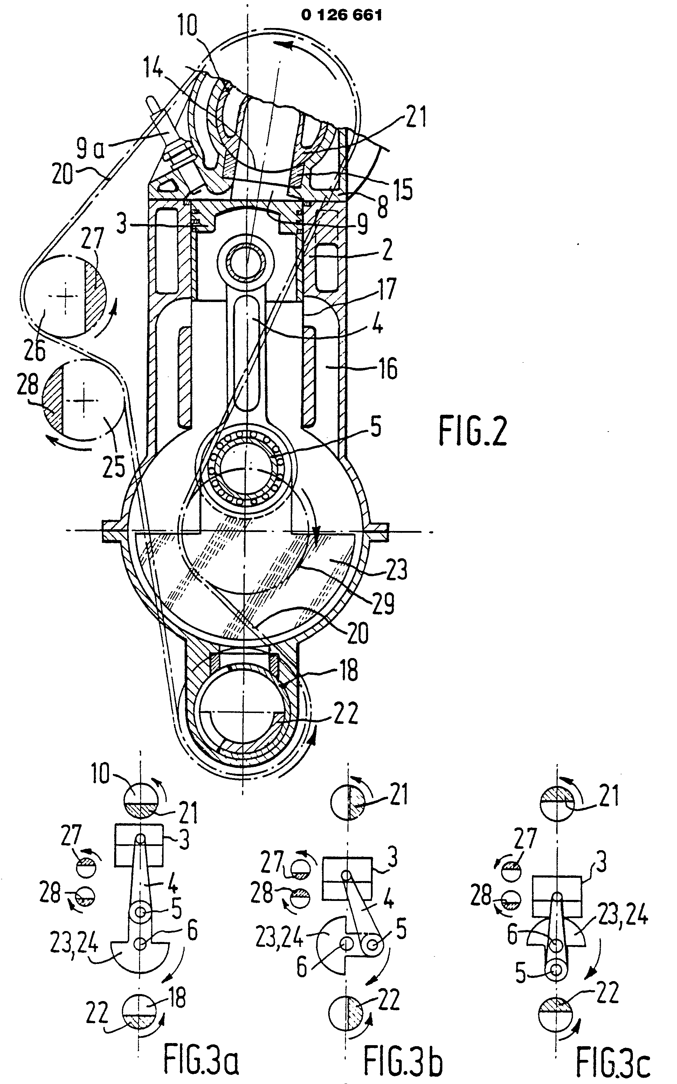

Le moteur thermique monocylindrique fonctionnant selon un cycle à deux temps, et représenté sur les figures 1 et 2, comporte essentiellement, dans un corps ou bloc moteur 1 en plusieurs parties assemblées : un cylindre 2, un piston 3 relié par une bielle 4 et un maneton ou manivelle 5 à un vilebrequin 6 monté rotatif sur des paliers 7 tels que des roulements à billes ou à rouleaux. Le vilebrequin 6 est relié mécaniquement à un organe à entraîner en rotation tel qu'un essieu de véhicule ou une hélice d'avion (non représentée).

Le corps 1 comporte une culasse 8 de fermeture d'une chambre de combustion 9 délimitée par le piston 3. Dans la culasse 8 est logé un distributeur rotatif d'échappement 10 traversé en diagonale par un passage d'échappement 11 qui, à chaque tour complet, peut relier par un passage de grande section la chambre de combustion 9 à un conduit d'échappement 12 vers l'extérieur. La disposition en diagonale du passage d'échappement 11 permet d'éviter qu'après un demi-tour de rotation du distributeur 10, la chambre de combustion ne soit reliée au conduit d'échappement 12. Le distributeur rotatif 10 est refroidi par un circuit d'eau activé par une pompe centrifuge 13 et ne risque ainsi pas de gripper dans son logement 14 de support et de guidage ou sur son anneau d'étanchéité 15 repoussé sur la surface cylindrique extérieure ou distributeur par la pression régnant dans la chambre de combustion 9 sur laquelle débouche une bougie d'allumage 9a ou un injecteur de carburant vissé dans la paroi de la culasse 8.

L'alimentation en air (le cas échéant enrichi en carburant vaporisé) de la chambre de combustion 9 s'effectue à partir du carter du vilebrequin 6 par des passages latéraux 16 ménagés entre des lumières d'entrée dans le corps 1 à l'intérieur du carter de vilebrequin et des lumières d'injection 17 débouchant dans la paroi du cylindre 2 et normalement obturées par le piston 3 sauf au point mort bas de ce piston.

Le carter de vilebrequin est gavé en air par un compresseur volumétrique ou à turbine, auquel cas aucun distributeur n'est nécessaire, ou bien est alimenté par la dépression produite dans le carter par la montée du piston vers son point mort haut selon le cycle à deux temps. Dans ce dernier cas, un distributeur rotatif d'admission 18 est monté rotatif dans le carter de vilebrequin, pour relier ce carter de vilebrequin à un conduit d'admission d'air 19 lorsque le piston 3 monte vers son point mort haut et isoler le carter de vilebrequin dès que le piston 3 redescend comme on le voit sur la figure 2 afin de permettre au piston 3 de pressuriser le carter de vilebrequin au cours de sa descente vers son point mort bas.

Conformément à l'invention, le distributeur rotatif d'échappement 10 et le distributeur rotatif d'admission 18 sont disposés sur une ligne passant par l'axe du vilebrequin (6) et sont entraînés en rotation par une courroie crantée 20 en sens inverse du sens de rotation du vilebrequin 6 et à la même vitesse de rotation que lui et possèdent chacun un balourd, respectivement 21 pour le distributeur 10 et 22 pour le distributeur 18, dirigé vers le bas selon les figures 1 et 2 lorsque le piston 3 est au point mort haut et vers le haut lorsque ce piston est au point mort bas, comme représenté sur les figures 3a à 3c.

Pour permettre l'entraînement correct des distributeurs 10 et 18, des pignons de même diamètre primitif sont calés sur le vilebrequin 6 et sur les axes d'entraînement de ces distributeurs et la courroie crantée 20 enveloppe le pignon de vilebrequin 29 et possède un crantage sur ses deux faces ou bien est remplacée par une chaîne.

Les balourds 21 et 22 des distributeurs rotatifs participent, avec les contrepoids 23 et 24 du vilebrequin 6, à l'équilibrage des forces d'inertie primaires de l'ensemble mobile du moteur : piston 3, bielle 4, vilebrequin (5 et 6) avec ses contrepoids. La présence de masses d'équilibrage sur les distributeurs 10 et 18 permet de réduire au minimum l'encombrement du vilebrequin 6 dans son carter sans avoir à tenir compte, pour cela, des contraintes d'équilibrage.

Selon une autre caractéristique importante de l'invention, le moteur est équipé de masses rotatives auxiliaires 25 et 26 fonctionnant, par exemple, en tendeur de la courroie 20 et dotées de masses d'équilibrage 27 et 28 pour l'équilibrage des forces d'inertie secondaires (en $2\omega t$) de l'ensemble mobile du moteur. Les masses rotatives sont placées de part et d'autre de la courroie 20 de façon à être entraînées en sens inverse à une vitesse double de la vitesse de rotation du vilebrequin 6 pour s'appliquer uniquement aux forces d'inertie secondaires sans autre effet parasite.

Pour être entraînées à une vitesse de rotation double de celle du moteur, les masses rotatives annulaires 25 et 26 sont, soit reliées à des pignons de diamètre primitif moitié de celui du pignon 29 du vilebrequin 6, soit reliées à ce vilebrequin 6 par une transmission mécanique convenable indépendante de celle entraînant les distributeurs rotatifs 10 et 18.

Les diverses positions prises par les balourds d'équilibrage au cours de la rotation du moteur sont représentées schématiquement sur les figures 3a à 3c. Si l'on se reporte à la figure 3a, on voit que le piston 3 est au point mort haut comme représenté sur les figures 1 et 2, à l'instant où s'effectue soit le début de l'injection du carburant dans la chambre de combustion 9, soit l'allumage par la bougie 9a du mélange carburé et comprimé contenu dans cette chambre de combustion 9. Dans cette position de point mort haut du piston 3, les balourds 21 et 22 des distributeurs 10 et 18 qui tournent en sens inverse à celui du vilebrequin 6, sont situés à la partie basse de ces distributeurs selon la figure et les balourds 27 et 28 des masses rotatives d'équilibrage du second ordre, sont orientés alternativement vers le haut et vers le bas de la figure.

La figure 3b représente les équipages mobiles après un quart de tour de vilebrequin au cours de la descente du piston 3 vers son point mort bas sous l'effet de la pression des gaz régnant dans la chambre de combustion 9 après l'allumage du mélange combustible qu'elle contient.

Les balourds 21 et 22 ont, eux aussi, tourné d'un quart de tour en sens inverse du vilebrequin et viennent se porter du côté de la tête de bielle entourant le maneton 5. Les balourds 27 et 28 d'équilibrage des forces d'inertie du second ordre ont échangé leurs positions en tournant en sens inverse l'un de l'autre.

Si l'on se reporte enfin à la figure 3c, qui représente schématiquement les équipages mobiles du moteur à la position de point mort bas du piston 3, on voit que les balourds 21 et 22 d'équilibrage des forces d'inertie primaires sont venus se placer en haut de leurs distributeurs correspondants 10 et 18 par rapport à la figure afin d'ajouter leur action à celle des contrepoids 23 et 24 solidaires du vilebrequin 6. Les balourds 27 et 28 d'équilibrage des forces d'inertie secondaires ont à nouveau échangé leurs positions relatives et sont revenus dans la position qu'ils occupaient au point mort haut.

Le cycle se continue par le passage de la tête de bielle en position de quart de tour vers la gauche (non représentée) au cours de la remontée du piston 3 vers le point mort haut, position au début de laquelle les gaz frais comprimés dans le carter du vilebrequin (de volume le plus réduit possible grâce à la réduction du volume des contrepoids 23 et 24) sont refoulés dans la chambre de combustion 9 par les passages latéraux 16 et les lumières de cylindre 17 ouvertes lorsque le piston 3 est en position basse.

Le moteur monocylindrique équilibré selon l'invention ne présente ainsi pratiquement pas de vibrations dues à l'inertie des masses mobiles car, non seulement la masse très fortement excentrée de son vilebrequin et de sa bielle est équilibrée mais, en plus, les forces d'inertie du second ordre relativement importantes pour de tels moteurs sont équilibrées par les masses d'équilibrage auxiliaires 25 et 26. L'équilibrage selon l'invention ne nécessite que peu de complications mécaniques car il utilise la courroie ou la chaîne de distribution qui est, de toute façon, indispensable pour de tels moteurs à haute performance fonctionnant selon des cycles à deux ou quatre temps avec ou sans surpression d'alimentation.

L'équilibrage des moteurs, selon l'invention, permet de remplacer les moteurs à quatre ou six cylindres utilisés habituellement en aéronautique ou en construction automobile par des moteurs mono ou bicylindriques plus performants sur le plan du rendement, du poids et aussi, pour les petites séries, du coût de fabrication.

Un tel équilibrage peut s'appliquer à d'autres machines alternatives à pistons telles que les compresseurs de gaz ou les pompes à liquide.

**Revendications**

1. Procédé d'équilibrage des forces d'inertie dans une machine rotative comportant au moins un piston (3) mobile axialement dans un cylindre (2), telle qu'un moteur thermique et équipée par cylindre d'au moins un distributeur tournant d'admission (18) et/ou un distributeur tournant d'échappement (10) et d'une masse principale d'équilibrage partiel (23, 24) fixée sur le vilebrequin (6) à l'opposé du maneton de la bielle du piston, caractérisé en ce que l'on reporte sous forme d'un balourd (21, 22) sur ce distributeur (10, 18) au moins une masse d'équilibrage secondaire qui se conjugue avec la masse d'équilibrage principale pour équilibrer les forces d'inertie primaires de l'ensemble piston-bielle-manivelle (3, 4, 5) et en ce que l'on entraîne ce distributeur (10, 18) en rotation en sens inverse du sens de rotation du vilebrequin (6) de la machine et en synchronisme angulaire avec ce vilebrequin, de manière à compenser les forces d'inertie tournantes et les forces d'inertie axiales de l'ensemble de la machine.

2. Procédé d'équilibrage selon la revendication 1, caractérisé en ce que l'on fait passer la ligne joignant l'axe du distributeur tournant d'admission (18) et l'axe du distributeur tournant d'échappement (10) sensiblement par l'axe de rotation du vilebrequin (6).

3. Procédé d'équilibrage selon la revendication 1 ou 2, caractérisé en ce que l'on dispose le balourd (21, 22) sur le distributeur de telle façon qu'il soit en position basse lorsque le piston (3) est au point mort haut (volume minimum dans la chambre du cylindre) et en position haute lorsque le piston (3) est au point mort bas et respectivement à droite lorsque la masse d'équilibrage principale est à gauche et vice versa.

4. Procédé d'équilibrage selon l'une des revendications 1 à 3, caractérisé en ce que lorsque le distributeur tournant d'admission (18) et/ou le distributeur d'échappement (10) comporte un passage transversal (11), l'on incline celui-ci par rapport à l'axe du cylindre (2) afin de permettre au passage (11) de ne s'ouvrir complètement qu'une fois par tour de vilebrequin (6) en dépit de la vitesse de rotation du distributeur (10, 18) égale à celle du vilebrequin (6) et de son sens de rotation inverse de celui du vilebrequin.

5. Procédé d'équilibrage selon l'une des revendications 1 à 4, dans lequel une liaison cinématique avec le vilebrequin de la machine tournante telle qu'une chaîne ou une courroie crantée, entraîne également une masse rotative telle qu'au moins une poulie ou un pignon tendeur, caractérisé en ce que l'on reporte, sous forme d'un balourd sur cette masse rotative, au moins une partie des masses d'équilibrage des forces d'inertie secondaires (forces en 2 $\omega t$) de l'ensemble piston-bielle-manivelle (3, 4, 5) et en ce que l'on entraîne cette masse rotative (25, 26) à une vitesse de rotation double de celle du vilebrequin (6) de la machine tournante.

6. Procédé d'équilibrage selon la revendication 5, caractérisé en ce que l'on remplace la masse rotative unique par deux masses contrarotatives (25, 26) dotées chacune d'un balourd (27, 28) et sensiblement identiques pour annuler les couples de basculement des balourds.

7. Procédé d'équilibrage selon la revendication 6, caractérisé en ce que l'on dispose les masses contrarotatives dans des positions diamétralement opposées.

8. Procédé d'équilibrage selon la revendication 7, caractérisé en ce que l'on dispose les masses contrarotatives alternativement en position haute et basse lorsque la ou les masse(s) d'équilibrage secondaire est (sont) en position haute et en position basse.

9. Dispositif pour la mise en œuvre du procédé selon la revendication 1, dans une machine rotative comportant au moins un piston (3) mobile axialement dans un cylindre (2), telle qu'un moteur thermique et équipée par cylindre d'au moins un distributeur tournant d'admission (18) et/ou un distributeur tournant d'échappement

(10) et d'une masse principale d'équilibrage partiel (23, 24) fixée sur le vilebrequin à l'opposé du maneton de la bielle du piston, caractérisé en ce que le distributeur (10, 18), d'une part, est entraîné en rotation à la même vitesse angulaire que le vilebrequin (6) de la machine et en sens inverse du sens de rotation de ce vilebrequin par une liaison cinématique avec ce vilebrequin telle qu'une chaîne ou courroie crantée (20) à double crantage, et, d'autre part, comporte un balourd d'équilibrage (21, 22) d'au moins une partie des forces d'inertie primaires de l'ensemble piston-bielle-manivelle (3, 4, 5) correspondant au cylindre (2).

10. Dispositif selon la revendication 9, caractérisé en ce que la droite joignant l'axe du distributeur tournant d'admission (18) et l'axe du distributeur tournant d'échappement (10) passe sensiblement par l'axe de rotation du vilebrequin (6).

11. Dispositif selon la revendication 9 ou 10, caractérisé en ce que le balourd (21, 22) est disposé sur le distributeur (10, 18) de telle façon qu'il soit en position basse lorsque le piston (3) est au point mort haut (volume minimum dans la chambre de cylindre) et en position haute lorsque le piston (3) est au point mort bas et respectivement à droite lorsque la masse d'équilibrage principale est à gauche et vice versa.

12. Dispositif selon l'une des revendications 9 à 11, caractérisé en ce que, lorsque le distributeur tournant d'admission (18) et/ou le distributeur d'échappement (10) comporte un passage transversal (11), celui-ci est incliné par rapport à l'axe du cylindre (2) afin de permettre au passage de ne s'ouvrir complètement qu'une fois par tour de vilebrequin (6) en dépit de la vitesse de rotation du distributeur (10, 18) égale à celle du vilebrequin (6) et de son sens de rotation inverse de celui du vilebrequin.

13. Dispositif selon l'une des revendications 9 à 12, dans lequel une liaison cinématique avec le vilebrequin de la machine tournante telle qu'une chaîne ou une courroie crantée entraîne également la masse rotative telle qu'au moins une poulie ou un pignon tendeur, caractérisé en ce que la masse rotative (25, 26) d'une part, est entraînée en rotation à une vitesse angulaire double de celle du vilebrequin (6) de la machine rotative et, d'autre part, comporte un balourd d'équilibrage (27, 28) d'au moins une partie des forces d'inertie secondaires (en 2 ωt) de l'ensemble piston-bielle-manivelle (3, 4, 5) correspondant au cylindre (2).

14. Dispositif selon la revendication 13, caractérisé en ce que la machine tournante comporte deux masses contrarotatives (25, 26) dotées chacune d'un balourd d'équilibrage (27, 28) et sensiblement identiques pour annuler les couples de basculement des balourds.

15. Dispositif selon la revendication 14, caractérisé en ce que les masses contrarotatives (25, 26) sont disposées dans des positions diamétralement opposées.

16. Dispositif selon la revendication 15, caractérisé en ce que les masses contrarotatives (25, 26) sont disposées alternativement en position haute et basse lorsque la ou les masse(s) d'équilibrage (21, 22) est (sont) en position haute et en position basse.

## Claims

1. Process of balancing inertia forces in a rotative machine comprising at least one piston (3) axially movable in a cylinder (2), such as a combustion motor, and wherein each cylinder is equipped with at least one rotary inlet distributor (18) or exhaust distributor (10) and with a main partial balancing mass (23, 24) affixed to the crank-shaft (6) opposite to the crank-pin of the piston rod, characterized in that it comprises attaching to said distributor (10, 18) at least one secondary balancing mass in the form of an off-balance mass (21, 22) which cooperates with the main balancing mass so as to balance the primary inertia forces of the piston-plus-piston rod-plus-crank-pin assembly (3, 4, 5), and rotatively driving said distributor (10, 18) in the direction opposite to that of the direction of rotation of said crank-shaft (6) of the machine and in angular synchronism with said crank-shaft, so as to compensate the rotative inertia forces and the axial inertia forces of the entire machine assembly.

2. Process of balancing according to claim 1, characterized in that the line connecting the axis of the rotary inlet distributor (18) to the axis of the rotary exhaust distributor (10) is made substantially to intersect the axis of rotation of the crank-shaft (6).

3. Process of balancing according to claim 1 or 2, characterized in that it comprises disposing the off-balance mass (21, 22) on the distributor in such a manner that said off-balance mass is in its lowermost position when the piston (3) is at its upper dead center (minimum volume in the cylinder chamber), and in its uppermost position when the piston (3) is at its lower dead center, while being located on the right side when the main balancing mass is located at the left side, and vice-versa.

4. Process of balancing according to any one of claims 1 to 3, characterized in that in the presence of a rotary inlet distributor (18) and/or a rotary exhaust distributor (10) provided with a transverse passage (11), said passage is inclined with respect to the axis of the cylinder (2) so as to allow the passage (11) to be completely opened only once per revolution of the crank-shaft (6), whichever the rotational speed of the distributor (10, 18) which equals that of the crank-shaft (6) and whichever its direction of rotation which is opposite to that of the crankshaft.

5. Process of balancing according to any one of 1 to 4, wherein a kinetic link, such as a chain or a toothed belt, is connected to the crank-shaft of the rotative machine, and furthermore drives a rotative mass such as at least one pulley or a tension gear wheel, characterized in that at least a part of the masses for balancing the secondary

inertia forces (2 ωt forces) of the piston-plus-piston rod-plus-crank-pin assembly (3, 4, 5) is disposed on said rotative mass in the form of an off-balance mass, and in that said rotative mass (25, 26) is driven at a rotary speed equal to twice that of the crank-shaft (6) of said rotative machine.

6. Process of balancing according to claim 5, characterized in that the single rotating mass is replaced by two masses rotating in opposite directions (25, 26) and provided each with an off-balance mass (27, 28), while being substantially identical so as to cancel the tipping moments of the off-balance masses.

7. Process of balancing according to claim 6, characterized in that the masses rotating in opposite direction are disposed at diametrically opposed locations.

8. Process of balancing according to claim 7, characterized in that the masses rotating in opposed directions are placed alternatively in an upper position and in a lower position when the secondary balancing mass(es) is (are) in an upper position and in a lower position.

9. Device for carrying out the process according to claim 1, in a rotative machine comprising at least one piston (3) axially movable in a cylinder (2), such a combustion motor, and equipped, for each cylinder, with at least one rotative inlet distributor (18) and/or rotative exhaust distributor (10) and with a main partial balancing mass (23, 24) affixed to the crank-shaft, opposite to the crank pin of the piston rod, characterized in that the distributor (10, 18) is driven, on the one hand, at the same angular speed as that of the crank-shaft and in a direction of rotation opposed to that of said crank-shaft, by a connecting means, such as a chain or a double-toothed belt (20), said distributor comprising, on the other hand, an off-balance mass (21, 22) for balancing at least a part of a primary inertia forces of the piston-plus-piston-rod-plus-crank pin assembly (3, 4, 5) corresponding to the cylinder (2).

10. Device according to claim 9, characterized in that the straight line interconnecting the axis of the rotative inlet distributor (18) to the axis of the rotative exhaust distributor (10) substantially intersects the axis of rotation of the crank-shaft (6).

11. Device according to claim 9 or 10, characterized in that the off-balance mass (21, 22) is disposed on the distributor in such a manner that said mass is in a lower position when the piston (3) is at its uppermost dead center, and in an upper position when said position (3) is at its lower most dead center, said off-balance mass being furthermore placed on the right side when the main balancing mass is located at the left side, and vice-versa.

12. Device according to any one of claims 9 to 11, characterized in that, when the rotative inlet distributor (18) and/or the rotative exhaust distributor (10) is (are) provided with a transverse passage (11), said passage is inclined with respect to the axis of the cylinder (2) so as to be completely open only once per revolution of the crank-shaft (6), whichever the rotational speed of the distributor (10, 18) which equals that of the crank-shaft (6), and whichever its direction of rotation which is opposed to that of the crank-shaft.

13. Device according to any one of claims 9 to 12, wherein a kinematic link, such as a chain or a toothed belt, is connected to the crankshaft of the machine and further drives a rotative mass, such as at least one pulley or a tension gear wheel, characterized in that the rotative mass (25, 26) is rotated, on the one hand, at twice the angular speed of the crank-shaft (6) of the machine and comprises, on the other hand, an off-balance mass (27, 28) for balancing at least a part of the secondary inertia forces (2 ωt forces) of the piston-plus-piston-rod-plus-crank pin assembly (3, 4, 5) corresponding to the cylinder (2).

14. Device according to claim 13, characterized in that the rotative machine comprises two masses (25, 26) rotating in opposite directions and provided each with an off-balance mass (27, 28), said off-balance masses being substantially identical so as to cancel the tipping moments of said off-balance masses.

15. Device according to claim 14, characterized in that said masses rotating in opposite directions (25, 26) are arranged at diametrically opposed locations.

16. Device according to claim 15, characterized in that said masses rotating in opposite directions (25, 26) are alternatively in an upper position and in a lower position when said balancing mass(es) (21, 22) is (are) in an upper position and in a lower position.

**Patentansprüche**

1. Verfahren zum Auswuchten der Trägheitskräfte in einer wenigstens einen in einem Zylinder (2) axial beweglichen Kolben (3) aufweisenden Rotationsmaschine, wie Verbrennungsmotor, die pro Zylinder wenigstens einen Rotations-Einlassverteiler (18) und/oder einen Rotations-Auspuffverteiler (10), sowie eine Haupt-Teilauswuchtmasse (23, 24) umfasst, welche an einer dem Kurbelzapfen der Kolbenstange gegenüberliegenden Stelle der Kurbelwelle (6) angeordnet ist, dadurch gekennzeichnet, dass man auf diesem Verteiler (10, 18) wenigstens eine sekundäre Auswuchtmasse in Form eines Unwuchtelements (21, 22) anordnet, welche mit der Haupt-Auswuchtmasse zusammenwirkt, um die primären Trägheitskräfte der Kolben-, Kolbenstangen- und Kurbeleinheit (3, 4, 5) auszuwuchten, und dass man diesen Verteiler (10, 18) im dem Drehsinn der Maschinen-Kurbelwelle (6) entgegensetzten Drehsinn und drehsynchronisch mit dieser Kurbelwelle antreibt, um die Drehträgheitskräfte und die axialen Trägheitskräfte der gesamten Maschine auszugleichen.

2. Auswuchtverfahren nach Anspruch 1, dadurch gekennzeichnet, dass man die die Achse des Rotations-Einlassverteilers (18) mit der Achse des Rotations-Auspuffverteilers (10) verbindende Linie im Wesentlichen durch die Drehachse der Kurbelwelle (6) führt.

3. Auswuchtverfahren nach Anspruch 1 oder 2, dadurch gekennzeichnet, dass die Unwuchtmasse (21, 22) an dem Verteiler derart anordnet, dass sie sich in ihrer Tieflage befindet, wenn der Kolben (3) am oberen Totpunkt liegt (Minimalvolumen in der Zylinderkammer), und dass sie sich in ihrer Hochlage befindet, wenn der Kolben (3) am unteren Totpunkt liegt, ferner derart, dass die Unwuchtmasse sich auf der rechten Seite befindet, wenn die Haupt-Auswuchtmasse auf der linken Seite liegt, und umgekehrt.

4. Auswuchtverfahren nach einem der Ansprüche 1 bis 3, dadurch gekennzeichnet, dass man bei Vorhandensein einer Querbohrung (11) im Rotations-Einlassverteiler (18) und/oder im Rotations-Auspuffverteiler (10) diese Bohrung in bezug auf die Achse des Zylinders (2) neigt, derart, dass die Querbohrung (11) nur einmal pro Umdrehung der Kurbelwelle (6) freigelegt wird, unabhängig von der Drehgeschwindigkeit des Verteilers (18, 10), die derjenigen der Kurbelwelle (6) gleich ist und unabhängig vom Drehsinn der Kurbelwelle entgegensetzten Drehsinns des Verteilers.

5. Auswuchtverfahren nach einem der Ansprüche 1 bis 4, bei dem eine kinematische Verbindung mit der Kurbelwelle der Rotationsmaschine, wie eine Kette oder ein Zahntreibriemen zugleich eine umlaufende Masse, wie eine Rolle oder ein Spannzahnrad antreibt, dadurch gekennzeichnet, dass man an dieser umlaufenden Masse wenigstens einen Teil der Auswuchtmassen zum Auswuchten der sekundären Trägheitskräfte (Kräfte 2 ωt) der Kolben-, Kolbenstangen- und Kurbeleinheit (3, 4, 5) in Form einer Unwuchtmasse anordnet, und dass man diese umlaufende Masse (25, 26) mit einer Geschwindigkeit dreht, die der doppelten Drehgeschwindigkeit der Kurbelwelle (6) der Maschine entspricht.

6. Auswuchtverfahren nach Anspruch 5, dadurch gekennzeichnet, dass man die einzige umlaufende Masse durch zwei in einander entgegengesetzten Drehrichtungen umlaufende Massen (25, 26) ersetzt, deren jede eine Unwuchtmasse (27, 28) aufweist und die einander wesentlich gleich sind, um die Kippmomente der Unwuchtmassen aufzuheben.

7. Auswuchtverfahren nach Anspruch 6, dadurch gekennzeichnet, dass man die in entgegengesetzten Richtungen umlaufenden Massen in einander diametral entgegenliegenden Stellen anordnet.

8. Auswuchtverfahren nach Anspruch 7, dadurch gekennzeichnet, dass man die in entgegengesetzten Richtungen umlaufenden Massen abwechselnd an einer oben und einer unten gelegenen Stelle anordnet, wenn sich die sekundären Auswuchtmasse(n) in der hohen und in der tiefen Lage befindet (befinden).

9. Vorrichtung zur Ausführung des Verfahrens nach Anspruch 1, in einer wenigstens einen axial in einem Zylinder (2) beweglichen Kolben (3) aufweisenden Rotationsmaschine, wie Verbrennungsmotor, die pro Zylinder wenigstens einen Rotations-Einlassverteiler (18) und/oder einen Rotations-Auspuffverteiler (10), sowie eine Haupt-Teilauswuchtmasse (23, 24) umfasst, welche an einer dem Kurbelzapfen der Kolbenstange gegenüberliegenden Stelle der Kurbelwelle angeordnet ist, dadurch gekennzeichnet, dass der Verteiler (10, 18) einerseits durch ein kinematisches Verbindungsmittel, wie Kette oder doppelt verzahnter Treibriemen (20) mit der gleichen Geschwindigkeit gedreht wird, wie die Kurbelwelle (6) der Maschine, jedoch im dem Drehsinn der Kurbelwelle entgegengesetzten Drehsinn, und dass der Verteiler andererseits eine Auswuchtungs-Unwuchtmasse (21, 22) zum Auswuchten wenigstens eines Teils der primären Trägheitskräfte der dem Zylinder (2) entsprechenden Kolben-, Kolbenstangen- und Kurbeleinheit (3, 4, 5) aufweist.

10. Vorrichtung nach Anspruch 9, dadurch gekennzeichnet, dass die die Achse des Rotations-Einlassverteilers (18) mit der Achse des Rotations-Auspuffverteilers (10) verbindende Gerade wesentlich durch die Drehachse des Kurbelwelle (6) verläuft.

11. Vorrichtung nach Anspruch 9 oder 10, dadurch gekennzeichnet, dass die Unwuchtmasse (21, 22) an dem Verteiler (10, 18) derart angeordnet ist, dass sie sich in ihrer Tieflage befindet, wenn der Kolben (3) am oberen Totpunkt liegt (Minimalvolumen in der Zylinderkammer), und dass sie sich in ihrer hohen Lage befindet, wenn der Kolben (3) am unteren Totpunkt liegt, sowie derart, dass diese Unwuchtmasse sich an der rechten Seite befindet, wenn die Haupt-Auswuchtmasse sich an der linken Seite befindet, und umgekehrt.

12. Vorrichtung nach einem der Ansprüche 9 bis 11, dadurch gekennzeichnet, dass bei Vorhandensein einer Querbohrung (11) im Rotations-Einlassverteiler (18) und/oder im Rotations-Auspuffverteiler (10) diese Querbohrung in bezug auf die Achse des Zylinders (2) geneigt ist, sodass die Bohrung nur einmal pro Umdrehung der Kurbelwelle (6) völlig freigelegt wird, unabhängig von der Drehgeschwindigkeit des Verteilers (10, 18) welche derjenigen der Kurbelwelle (6) entspricht, und unabhängig vom Drehsinn der Kurbelwelle entgegengesetzten Drehsinn des Verteilers.

13. Vorrichtung nach einem der Ansprüche 9 bis 12, bei welcher das kinematische Verbindungsmittel mit der Kurbelwelle der Rotationsmaschine, wie Kette oder Zahntreibriemen, zugleich eine umlaufende Masse, wie wenigstens eine Rolle bzw. ein Spannzahnrad antreibt, dadurch gekennzeichnet, dass die umlaufende Masse (25, 26) einerseits mit einer Drehgeschwindigkeit angetrieben wird, die doppelt so gross ist wie diejenige der Kurbelwelle (6) der Rotationsmaschine, und dass diese umlaufende Masse andererseits eine Ausgleichs-Unwuchtmasse (27, 28) zum Auswuchten wenigstens eines Teils der dem Zylinder (2) entsprechenden sekundären Trägheitskräfte (2 ωt) der Kolben-,

Kolbenstangen- und Kurbeleinheit (3, 4, 5) aufweist.

14. Vorrichtung nach Anspruch 13, dadurch gekennzeichnet, dass die Rotationsmaschine zwei in einander entgegengesetzten Drehsinnen gedrehte Massen (25, 26) aufweist, deren jede eine Ausgleichsunwuchtmasse (27, 28) besitzt, und die einander wesentlich gleich sind, um die Kippmomente des Unwuchten aufzuheben.

15. Vorrichtung nach Anspruch 14, dadurch gekennzeichnet, dass die in entgegengesetztem Drehsinn umlaufenden Massen (25, 26) an einander diametral gegenüberliegenden Stellen angeordnet sind.

16. Vorrichtung nach Anspruch 15, dadurch gekennzeichnet, dass die in entgegengesetztem Drehsinn umlaufenden Massen (25, 26) sich abwechselnd in Hochlage und in Tieflage befinden, wenn die Auswuchtmasse(n) (21, 22) sich in ihrer Hochlage und ihrer Tieflage befindet (befinden).

FIG.1

0 126 661

FIG.2

FIG.3a  FIG.3b  FIG.3c